(19) Europäisches Patentamt
European Patent Office
Office européen des brevets

(11) **EP 4 385 107 B1**

(12) **FASCICULE DE BREVET EUROPEEN**

(45) Date de publication et mention
de la délivrance du brevet:
**08.10.2025   Bulletin 2025/41**

(21) Numéro de dépôt: **22760762.9**

(22) Date de dépôt: **29.07.2022**

(51) Classification Internationale des Brevets (IPC):
**H02H 3/02** *(2006.01)*      **H01H 9/54** *(2006.01)*
**H02H 3/08** *(2006.01)*

(52) Classification Coopérative des Brevets (CPC):
**H02H 3/021; H01H 33/596; H01H 85/46;**
**H02H 3/08;** H01H 2085/466

(86) Numéro de dépôt international:
**PCT/FR2022/051531**

(87) Numéro de publication internationale:
**WO 2023/017221 (16.02.2023 Gazette 2023/07)**

(54) **DISPOSITIF ET PROCEDE DE COUPURE DE COURANT ÉLECTRIQUE SOUS HAUTE TENSION CONTINUE AVEC FUSIBLE ET SYSTÈME DE SURCHARGE À COURANT OSCILLANT**

VORRICHTUNG UND VERFAHREN ZUM TRENNEN EINES HOCHSPANNUNGSGLEICHSTROMS MIT EINER SICHERUNG UND SCHWINGSTROMÜBERLASTUNGSSYSTEM

DEVICE AND METHOD FOR DISCONNECTING A HIGH-VOLTAGE DIRECT ELECTRIC CURRENT WITH A FUSE, AND OSCILLATING-CURRENT OVERLOAD SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **09.08.2021   FR 2108592**

(43) Date de publication de la demande:
**19.06.2024   Bulletin 2024/25**

(73) Titulaire: **Supergrid Institute**
**69100 Villeurbanne (FR)**

(72) Inventeur: **GRIESHABER, Wolfgang**
**69006 LYON (FR)**

(74) Mandataire: **Cabinet Beau de Loménie**
**51 avenue Jean Jaurès**
**BP 7073**
**69301 Lyon Cedex 07 (FR)**

(56) Documents cités:
**US-A- 3 868 552      US-A1- 2020 114 783**
**US-A1- 2020 411 271**

**Description**

Domaine Technique

L'invention concerne un dispositif de coupure de courant électrique sous haute tension continue (HVDC). De tels dispositifs sont destinés à être mis en œuvre dans des réseaux ou unités de réseaux HVDC en cas d'apparition d'un défaut électrique générant un courant de défaut dans au moins un conducteur électrique du réseau.

Dans le présent texte, on considère comme dispositif à haute tension continue soit un dispositif à « haute tension A », dans lequel la tension nominale de service continue est supérieure à 1500 V, mais inférieure ou égale à 75 000 V (75kV), soit un dispositif à « haute tension B » (ou très haute tension) lorsque la tension nominale de service continue est supérieure à 75 000 V (75kV). Ainsi, le domaine de la haute tension continue inclut le domaine de la « haute tension A » et celui de la « haute tension B ».

La coupure du courant dans de tels réseaux est un enjeu crucial conditionnant directement la faisabilité et le développement de tels réseaux.

Dans un circuit électrique, on trouve généralement au moins une source de tension, et au moins un consommateur de puissance électrique, qui peut comprendre tout appareil ou ensemble d'appareils ou tout réseau ayant de tels appareils qui utilisent l'énergie électrique pour la transformer en une autre forme d'énergie, par exemple en énergie mécanique, et/ou calorifique, et/ou électromagnétique, etc...

Dans un circuit électrique, on trouve généralement au moins un dispositif de coupure de courant électrique permettant d'interrompre la circulation du courant électrique dans le circuit, généralement entre la source de tension et le consommateur de puissance électrique.

On connait différents types de dispositif de coupure de courant électrique destinés à être interposés dans un conducteur électrique d'un circuit électrique. Par exemple, on connait les disjoncteurs, qui sont conçus et dimensionnés pour autoriser notamment une ouverture en charge ou en régime de défaut du circuit électrique dans lequel ils sont interposés. On connait par ailleurs des dispositifs de coupure électrique de conception plus simple, tels que des sectionneurs, qui ne sont généralement pas conçus pour réaliser des coupures de circuits en charge, mais plutôt pour assurer, dans un circuit où la circulation de courant est déjà interrompue par un autre appareil de coupure, la sécurité des biens et des personnes lors des interventions, en assurant une isolation électrique d'un niveau élevé prédéterminé entre une portion amont d'un conducteur du circuit, reliée par exemple à la source de tension, et une portion aval de ce conducteur du circuit.

On connait des dispositifs de coupure de courant électrique qui sont de type mécanique, la coupure du courant étant obtenue par l'ouverture d'un élément interrupteur mécanique. Un tel élément interrupteur mécanique comporte deux pièces conductrices faisant contact qui sont en contact mécanique et électrique lorsque l'élément interrupteur est fermé et qui se séparent mécaniquement lorsque l'élément interrupteur est ouvert. Cette séparation mécanique est généralement effectuée par mouvement d'une pièce conductrice mobile par rapport à une pièce conductrice fixe.

On connait des dispositifs de coupure de courant électrique qui sont de type à semi-conducteurs, la coupure du courant étant obtenue par une polarisation ou dépolarisation appropriée des couches semi-conductrices du dispositif pour interdire le passage du courant au travers du dispositif.

On connait aussi des dispositifs de coupure de courant électrique de type ampoule à vide ou tube à vide.

Tous ces dispositifs ont l'avantage d'être des dispositifs de coupure de courant électrique dans laquelle la coupure de courant est commandée, et est généralement réversible sans intervention humaine sur le dispositif. En revanche, ces dispositifs présentent toujours des limitations dans la capacité de couper des forts courants, notamment sous les tensions les plus élevées, encore plus dans le cas des tensions continues qui contrairement, aux tensions alternatives, n'ont pas un passage régulier par une valeur de tension nulle. De ce fait, la conception de tels dispositifs conduits à des appareils qui sont généralement, pour des capacités de coupure données en termes de tension et d'intensité du courant qu'ils sont capables de couper, encombrant et chers.

Dans certains cas, on dispose un dispositif de coupure de courant électrique sous haute tension continue (HVDC) dans un circuit électrique dans lequel on sait que la probabilité de survenance d'un défaut est faible, ou pour protéger un appareil ou une partie de réseau dont l'importance ne nécessite pas obligatoirement une capacité de remise en service immédiate. Dans de tels cas, il est judicieux de mettre en œuvre un dispositif de coupure de courant électrique dans lequel l'organe qui assure la coupure du courant électrique est un fusible.

Technique antérieure

Le document WO2020/259924 décrit un fusible qui est susceptible d'être utilisé pour assurer la coupure de courant électrique sous haute tension continue.

Le document US2020/0411271 décrit des dispositifs de coupure de courant électrique sous haute tension continue comprenant un fusible.

Bien entendu, dans un dispositif de coupure de courant électrique dans lequel l'organe qui assure la coupure de courant électrique est un fusible, on connaît la contrainte, directement liée à la présence du fusible, qui fait que la circulation de courant dans le circuit électrique protégé par ce dispositif de coupure ne peut pas être rétablie tant que l'on n'a pas remplacé le fusible. Le fusible est donc un consommable, et son remplacement nécessite une intervention, généralement humaine, sur le dispositif de coupure.

En revanche, dans la mesure où une telle contrainte est acceptable dans l'application envisagée, un dispositif de courant électrique dans lequel l'organe qui assure la coupure de courant électrique est un fusible présente de nombreux avantages. Notamment, un tel dispositif est généralement, pour une capacité de coupure donnée, de plus faible volume et de nettement plus faible coût que les dispositifs mécaniques, à semi-conducteurs ou à vide qui sont évoqués ci-dessus. De plus, en dehors d'une éventuelle opération de remplacement du fusible, de tels dispositifs ont généralement de faibles besoins de maintenance opérationnelle.

Dans de tels dispositifs dans lesquels l'organe qui assure la coupure de courant électrique est un fusible, on est capable d'assurer avec une grande fiabilité la coupure des courants de défaut les plus élevés, puisque, plus l'intensité du courant est élevée, plus l'élément fusible va fondre rapidement et interrompre le courant. De tels dispositifs seront donc très performants pour des courants de défaut engendrés par des défauts de faible impédance, par exemple un défaut à la terre.

En revanche, dans un défaut de plus forte impédance, la valeur maximale de l'intensité du courant de défaut, et la rapidité d'accroissement de l'intensité du courant de défaut pourront faire en sorte que le courant de défaut ne soit pas suffisant pour assurer une coupure rapide par le dispositif comportant le fusible. En effet, il est bien connu que la performance de coupure d'un fusible est généralement décrite par une grandeur qui est homogène à un carré de l'intensité traversant le fusible multiplié par la durée pendant laquelle ce courant traverse le fusible ($I^2 \times t$).

De la sorte, il apparaît que la coupure de courant à l'aide d'un fusible, si elle peut s'avérer très performante dans certaines situations, notamment lors de l'apparition d'un défaut de faible impédance, peut en revanche s'avérer insuffisamment performante dans d'autres cas, notamment lors de l'apparition d'un défaut de plus forte impédance.

Dans un autre domaine que celui de l'invention, notamment en dehors du domaine de la haute tension continue, on connait du document US-3.868.552 un dispositif de coupure de courant qui comporte un système de surcharge permettant d'injecter dans le fusible un courant de surcharge apte en provoquer la fusion. Cependant, ce dispositif est unidirectionnel en termes de direction du courant injecté dans le fusible par le système de surcharge. De ce fait, si le courant de défaut circule en sens inverse, les deux courants tendent à s'annuler, ce qui peut rendre le dispositif non-opérationnel, ou ce qui nécessite un surdimensionnement du système de surcharge.

L'invention vise à proposer un dispositif et un procédé de coupure de courant sous haute tension continue qui assure une protection performante, c'est-à-dire une coupure de courant en un temps réduit, pour un coût et un encombrement réduit en comparaison des solutions connues dans le domaine de la haute tension continue.

Exposé de l'invention

Dans ce but, l'invention selon la revendication 1 propose un dispositif de coupure de courant électrique sous haute tension continue, le dispositif comportant :

- un circuit principal, dans lequel circule, dans une configuration de conduction du dispositif de coupure, un courant électrique opérationnel sous une haute tension nominale de service continue du dispositif ;
- au moins un module de coupure, interposé dans le circuit principal entre un premier point et un second point du circuit principal pour le module de coupure, le module de coupure comprenant une branche principale, entre le premier point et le second point du module de coupure, avec au moins un fusible interposé dans la branche principale entre le premier point et le second point, le courant électrique opérationnel circulant, dans une configuration de conduction du dispositif de coupure, dans la branche principale.

Le dispositif de coupure est du type dans lequel le module de coupure comprend un système de surcharge qui, dans une configuration de surcharge du dispositif, en présence d'un courant de défaut dans le circuit principal, est apte à générer un courant de surcharge pour assurer la fusion du fusible.

Le dispositif est caractérisé en ce que le courant de surcharge est un courant oscillant qui, dans la branche principale, au cours d'au moins une demi-période d'oscillation, s'ajoute au courant de défaut en valeur absolue pour assurer la fusion du fusible.

D'autres caractéristiques optionnelles de l'invention sont décrites ci-après, qui peuvent être mises en œuvre séparément ou en combinaison.

Le système de surcharge peut comporter, en parallèle de la branche principale, une branche de surcharge ayant un conducteur de surcharge qui s'étend entre le premier point et le second point du module de coupure. Le système de surcharge comprend alors :

- au moins un condensateur de surcharge qui est interposé dans le conducteur de surcharge de la branche de surcharge, entre le premier point et le second point du module de coupure,
- un enclencheur de surcharge bidirectionnel qui est interposé dans le conducteur de surcharge de la branche de surcharge, l'enclencheur de surcharge et le condensateur de surcharge étant interposés successivement l'un à l'autre dans le conducteur de surcharge de la branche de surcharge entre le premier point et le second point du module de coupure, l'enclencheur de surcharge empêchant, dans un état ouvert, la circulation de courant électrique dans la branche de surcharge entre le premier point et le second point du module de coupure, et l'enclencheur de surcharge autorisant, dans un état fermé, la circulation de courant de manière bidirectionnelle dans la branche de surcharge entre le premier point et le second point du module de coupure, et
- un circuit de pré-charge du condensateur de surcharge.

Dans ce cas, dans la configuration de conduction du dispositif, l'enclencheur de surcharge est dans son état ouvert, et, dans la configuration de surcharge du dispositif, l'enclencheur de surcharge est dans son état fermé pour permettre la décharge du condensateur de surcharge dans la branche principale en créant un courant de surcharge oscillant qui, au cours d'au moins une demi-période d'oscillation, s'ajoute en valeur absolue au courant de défaut circulant dans la branche principale.

Dans certains modes de réalisation, le dispositif de coupure peut comprendre une unité de commande électronique qui est programmée pour, en présence d'un courant de défaut dans le circuit principal, commander l'enclencheur de surcharge vers son état fermé.

Dans certains modes de réalisation, l'enclencheur de surcharge présente, dans son état ouvert, une valeur maximale de tenue en tension au-delà de laquelle il bascule automatiquement dans son état fermé, et la branche principale présente une inductance dimensionnée pour créer une tension aux bornes de la branche principale qui est supérieure à la valeur maximale de tenue en tension de l'enclencheur de surcharge lorsqu'une vitesse de variation de courant dans la branche principale dépasse une valeur admissible prédéterminée.

Dans certains modes de réalisation, la branche de surcharge comporte un composant résistif dédié interposé dans le conducteur de surcharge entre le premier point et le second point du module de coupure.

Dans certains modes de réalisation, le module de coupure comprend au moins un parasurtenseur général qui est agencé électriquement en parallèle du fusible.

Dans certaines variantes d'un tel mode de réalisation, le module de coupure comprend une branche d'absorption, qui est agencée électriquement en parallèle de la branche principale et de la branche de surcharge entre le premier point et le second point du module de coupure, et le parasurtenseur général est alors interposé dans la branche d'absorption entre le premier point et le second point.

Dans certains modes de réalisation, le circuit de pré-charge du condensateur de surcharge comporte une ligne de fuite vers une référence de potentiel qui s'étend entre la référence de potentiel et un point de piquage dans la branche de surcharge, le point de piquage étant agencé dans le conducteur de surcharge de la branche de surcharge entre le condensateur de surcharge et l'enclencheur de surcharge.

Dans certains modes de réalisation, l'enclencheur de surcharge est un interrupteur statique bidirectionnel, par exemple un interrupteur bidirectionnel à semi-conducteurs, ou un interrupteur bidirectionnel à tube(s) électronique(s) ou à éclateur(s).

Dans certains modes de réalisation, le module de coupure comprend, en parallèle de la branche principale et de la branche de surcharge, une branche de surcharge additionnelle ayant un conducteur de surcharge additionnel qui s'étend entre le premier point et le second point du module de coupure.

Dans de tels modes de réalisation, le système de surcharge du module de coupure comprend :

- au moins un condensateur de surcharge additionnel qui est interposé dans le conducteur de surcharge additionnel de la branche de surcharge additionnelle, entre le premier point et le second point du module de coupure,
- un enclencheur de surcharge additionnel bidirectionnel qui est interposé dans le conducteur de surcharge additionnel de la branche de surcharge additionnelle, l'enclencheur de surcharge additionnel et le condensateur de surcharge additionnel étant interposés successivement l'un à l'autre dans le conducteur de surcharge additionnel de la branche de surcharge additionnelle entre le premier point et le second point du module de coupure, l'enclencheur de surcharge additionnel empêchant, dans un état ouvert, la circulation de courant électrique dans la branche de surcharge additionnelle entre le premier point et le second point du module de coupure, et l'enclencheur de surcharge additionnel autorisant, dans un état fermé, la circulation de courant de manière bidirectionnelle dans la branche de surcharge additionnelle entre le premier point et le second point du module de coupure, et
- un circuit de précharge du condensateur de surcharge additionnel.

Dans de tels modes de réalisation, dans la configuration de conduction du dispositif, l'enclencheur de surcharge additionnel est dans son état ouvert, et, dans une configuration de surcharge du dispositif, l'enclencheur de surcharge additionnel est dans son état fermé pour permettre la décharge du condensateur de surcharge additionnel dans la branche principale en créant un courant de décharge additionnel oscillant qui, dans la branche principale, au cours d'au moins une demi-période d'oscillation, s'ajoute en valeur absolue au courant de défaut circulant dans la branche principale.

Dans certains modes de réalisation, le module de coupure comprend au moins un circuit de décharge du condensateur de surcharge pour les opérations de maintenance.

Dans certains modes de réalisation, le module de coupure comprend, électriquement en parallèle du condensateur de surcharge, une résistance de protection de condensateur.

Dans certains modes de réalisation, le module de coupure comprend, électriquement en parallèle de l'enclencheur de surcharge (36), une résistance de protection d'enclencheur (62).

L'invention concerne aussi selon la revendication 14 un procédé de coupure d'un courant électrique sous haute tension continue, dans lequel la coupure du courant électrique est assurée par la fusion d'un fusible qui est interposé dans une branche principale dans laquelle circule, dans une phase de conduction nominale, un courant électrique opérationnel, dans lequel le procédé comporte :

- une étape de stockage d'une énergie électrique dans un système de surcharge ;
- une étape de génération, par le système de surcharge, d'un courant de surcharge qui, dans la branche principale, se superpose à un courant de défaut pour assurer la fusion du fusible.

Dans un tel procédé, le courant de surcharge est un courant oscillant qui, dans la branche principale, au cours d'au moins une demi-période d'oscillation, s'ajoute au courant de défaut en valeur absolue.

Dans certains modes de réalisation, l'étape de génération d'un courant de surcharge oscillant est déclenchée par la commande d'un enclencheur de surcharge bidirectionnel du système de surcharge.

Brève description des dessins

[Fig. 1] La figure 1 est une vue schématique illustrant un premier mode de réalisation de l'invention.
[Fig. 2] La figure 2 est une vue schématique illustrant un deuxième mode de réalisation de l'invention.
[Fig. 3] La figure 3 est une vue schématique illustrant un troisième mode de réalisation de l'invention.
[Fig. 4] La figure 4 est une vue schématique illustrant un quatrième mode de réalisation de l'invention.
[Fig. 5] La figure 5 est une vue schématique illustrant un cinquième mode de réalisation de l'invention.
[Fig. 6] La figure 6 est une vue schématique illustrant un sixième mode de réalisation de l'invention.
[Fig. 7] La figure 7 est une vue schématique illustrant un septième mode de réalisation de l'invention.
[Fig. 8] La figure 8 est une vue schématique illustrant un huitième mode de réalisation de l'invention.

Description des modes de réalisation

Dans un réseau électrique, la transmission de puissance électrique entre deux points donnés du réseau se fait par une ligne de transmission de puissance qui comprend généralement plusieurs conducteurs électriques dont chacun correspond à un pôle électrique de la ligne de transmission de puissance. Dans tous les cas, au sens du présent texte, un conducteur électrique peut être sous la forme d'un unique conducteur électrique qui s'étend entre deux points distincts du réseau considéré, ou sous la forme d'un ensemble de conducteurs électriques qui s'étendent en parallèle électriquement entre les deux mêmes points distincts du réseau considéré, tous les conducteurs de l'ensemble étant, à chaque instant, au même potentiel électrique.

Ainsi, dans un réseau sous haute tension continue (HVDC), la transmission de puissance électrique entre deux points donnés du réseau se fait par une ligne de transmission de puissance qui, dans beaucoup de cas, comporte deux pôles électriques, chaque pôle comprenant un conducteur électrique qui s'étend entre les deux points donnés du réseau. Dans ce cas, la ligne de transmission de puissance comporte donc deux conducteurs électriques de polarités différentes, avec, en charge, par exemple un conducteur électrique qui est à un potentiel positif et un conducteur électrique qui est à un potentiel négatif ou neutre. Toujours dans une unité de réseau HVDC, la transmission de puissance électrique entre deux points donnés du réseau peut aussi se faire par une voie de transmission de puissance à trois pôles électriques comprenant trois conducteurs électriques avec, en charge, un conducteur électrique qui est à un potentiel positif, un conducteur électrique qui est à un potentiel négatif, et un conducteur électrique qui est à un potentiel neutre. Dans certains cas, la transmission de puissance électrique entre deux points donnés du réseau peut se faire par une ligne de transmission de puissance à un seul pôle électrique, avec un conducteur électrique au potentiel de la ligne et avec un retour électrique par la terre.

Les différentes figures illustrent chacune un exemple de réalisation d'un dispositif de coupure 10 pour interrompre un courant électrique sous haute tension continue circulant dans un conducteur électrique 11, lequel peut par exemple appartenir à une ligne électrique de transmission de puissance électrique dans une unité de réseau HVDC qui fonctionne sous une tension nominale de service continue Unom supérieure à 1500 V, voire supérieure à 75 000 V. Le dispositif de coupure 10 est donc interposé dans le conducteur électrique 11 entre un point primaire 12 du dispositif 10 et un point secondaire 14 du dispositif 10 qui peuvent être des bornes de raccordement du dispositif 10 respectivement. Le dispositif de coupure 10 partage donc le conducteur électrique 11 en deux sections, une première section 11.1 qui est raccordée au point primaire 12, et une deuxième section 11.2 qui est raccordée au point secondaire 14. Dans les exemples illustrés, la première section 11.1 du conducteur électrique 11 est par exemple reliée à une source de haute tension continue 13, par exemple un convertisseur de tension. Dans les exemples illustrés, la deuxième section 11.2 du conducteur électrique 11 est par exemple reliée à une charge électrique (non représentée), par exemple un consommateur de puissance électrique.

Le dispositif de coupure 10 comporte donc un circuit principal 16, entre le point primaire 12 du dispositif 10 et le point secondaire 14 du dispositif 10, dans lequel circule, dans une configuration de conduction du dispositif de coupure 10, un courant électrique opérationnel sous une haute tension nominale de service du dispositif de coupure 10 continue (qui est la tension nominale de service Unom du réseau), qui est le courant électrique opérationnel circulant dans le conducteur 11, et dont l'intensité est inférieure ou égale à l'intensité nominale pour le dispositif. En effet, en fonction des besoins instantanés dans le réseau, l'intensité opérationnelle, celle qui circule à un instant donné dans le conducteur 11, peut varier en étant inférieure ou égale à l'intensité nominale. En revanche, en cas de défaut électrique, l'intensité du courant à travers le dispositif de coupure peut dépasser cette intensité nominale. Le dispositif de coupure 10 est configuré pour remplir le rôle d'un disjoncteur, à savoir qu'il a la capacité d'interrompre un courant d'intensité supérieure ou égale à l'intensité nominale, donc soit en charge à l'intensité nominale, soit en présence d'un courant de défaut d'intensité supérieure ou égale à l'intensité nominale. Bien entendu, au moins pour certains modes de réalisation, le dispositif de coupure 10 peut être configuré aussi pour pouvoir aussi assurer la coupure d'un courant d'intensité inférieure à l'intensité nominale.

Le dispositif de coupure 10 comporte au moins un module de coupure 18 qui est interposé dans le circuit principal 16 entre un premier point 20 et un second point 22 du circuit principal 16 pour le module de coupure 18. Dans les exemples illustrés, qui ne comportent qu'un seul module de coupure 18, le premier point 20 et le second point 22 du circuit principal 16 sont des points du circuit principal 16 qui sont au même potentiel électrique que, respectivement, le point primaire 12 et le point secondaire 14 du dispositif de coupure 10 qui délimitent le circuit principal 16 du dispositif de coupure 10.

On pourrait prévoir que le dispositif de coupure puisse comporter plusieurs modules de coupure qui peuvent être dans ce cas agencés électriquement en série dans le circuit principal 16, entre le point primaire 12 et le point secondaire 14 du dispositif de coupure 10. Ces plusieurs modules de coupure 10 peuvent être identiques entre eux, ou différents. Ces plusieurs modules de coupure 10 peuvent par exemple prendre l'une ou l'autre des formes de réalisation qui vont être décrites ci-après.

Le module de coupure 18 comporte une branche principale 24 pour le module de coupure 18 qui s'étend entre le premier point 20 et le second point 22 du module de coupure 18. Un fusible 26 est interposé dans la branche principale 24, entre le premier point 20 et le second point 22. Dans une configuration de conduction du dispositif de coupure 10, le courant électrique opérationnel circule dans la branche principale 24, donc au travers du fusible 26. La branche principale 24 du module 18 est celle dans laquelle circule le courant opérationnel en fonctionnement normal du réseau lorsque le dispositif de coupure 10 est dans sa configuration de conduction, le fusible 26 étant alors dans un état opérationnel dans lequel il conduit le courant qui le traverse d'une borne à l'autre.

Le principe de la protection d'un circuit électrique par un fusible est connu, y compris dans le domaine de la haute tension continue. Typiquement, un fusible comporte un corps externe tubulaire en matériaux isolants, par exemple céramique. À l'intérieur de ce corps externe tubulaire, un support central est agencé co-axialement et supporte, sur sa face cylindrique externe, le ou les fils fusibles qui sont généralement réalisés en matériaux métalliques. Le ou les fils fusibles sont par exemple réalisés en argent, éventuellement en argent pur. Le ou les fils fusibles sont généralement enroulés selon une hélice autour du support central. Le support central est réalisé en matériaux électriquement isolants, généralement en céramique. De préférence, l'espace entre le support central et la face cylindrique interne du corps externe tubulaire est rempli d'un matériau qui favorisera l'extinction d'un arc électrique qui est susceptible de se former au moment de la fusion du ou des fils fusibles. Ce matériau est par exemple du sable de quartz. Aux deux extrémités axiales du corps tubulaire externe, on trouve généralement des capuchons de contact qui forment chacun une des deux bornes du fusible. Des fusibles susceptibles d'être utilisés dans l'invention sont par exemple commercialisés par la société SIBA GmbH, Borker Strasse 20-22, 44354 Lünen, Allemagne.

Dans les conditions de courant et de tension prévues par construction du fusible, le fusible est amené à un état fondu dans lequel, sous l'effet du courant électrique traversant le fusible, le ou les fils fusibles ont fondu, empêchant toute conduction de courant électrique au travers du fusible 26, donc empêchant toute circulation de courant électrique dans la branche principale 24.

Bien entendu, s'il apparaît dans le circuit principal 16 un courant de défaut dont l'intensité est très supérieure aux conditions de courant et de tension prévues pour la fusion du fusible, ce dernier bascule dans son état fondu de manière spontanée, sans besoin d'aucune commande humaine ou électronique.

Toutefois, dans chacun des modes de réalisation illustrés, le module de coupure 18 comprend par ailleurs un système de surcharge 30 qui, dans une configuration de surcharge du dispositif, en présence d'un courant de défaut dans le circuit principal 16, est apte à générer un courant de surcharge oscillant qui, au cours d'au moins une demi-période d'oscillation, s'ajoute en valeur absolue le courant de défaut circulant dans la branche principale 24, pour accroitre l'intensité du courant au travers du fusible 26 et ainsi assurer la fusion du fusible 26.

Différents systèmes de surcharge 30 vont être décrits ci-après, en référence aux différents modes de réalisation illustrés et de leurs éventuelles variantes.

Dans tous les modes de réalisation illustrés, le système de surcharge 30 comporte au moins une branche de surcharge 32 qui est agencée en parallèle de la branche principale 24 entre le premier point 20 et le second point 22 du module de coupure 18. Cette branche de surcharge 32 comporte un conducteur électrique de surcharge 33 dont une extrémité est reliée électriquement directement au premier point 20 et dont l'autre extrémité est reliée électriquement directement au second point 22 du module de coupure 18, et dans lequel sont interposés au moins un condensateur de surcharge 34 et un enclencheur de surcharge 36.

Dans les exemples illustrés, le condensateur de surcharge 34 est illustré sous la forme d'un seul composant physique. Toutefois, le condensateur de surcharge 34 peut être réalisé sous la forme d'un ensemble de plusieurs condensateurs discrets agencés électriquement en série et/ou en parallèle les uns par rapport aux autres. Dans ce cas, le condensateur de surcharge 34 est alors le condensateur qui est électriquement équivalent à cet ensemble. Le condensateur de surcharge 34 présente une capacité électrique C34.

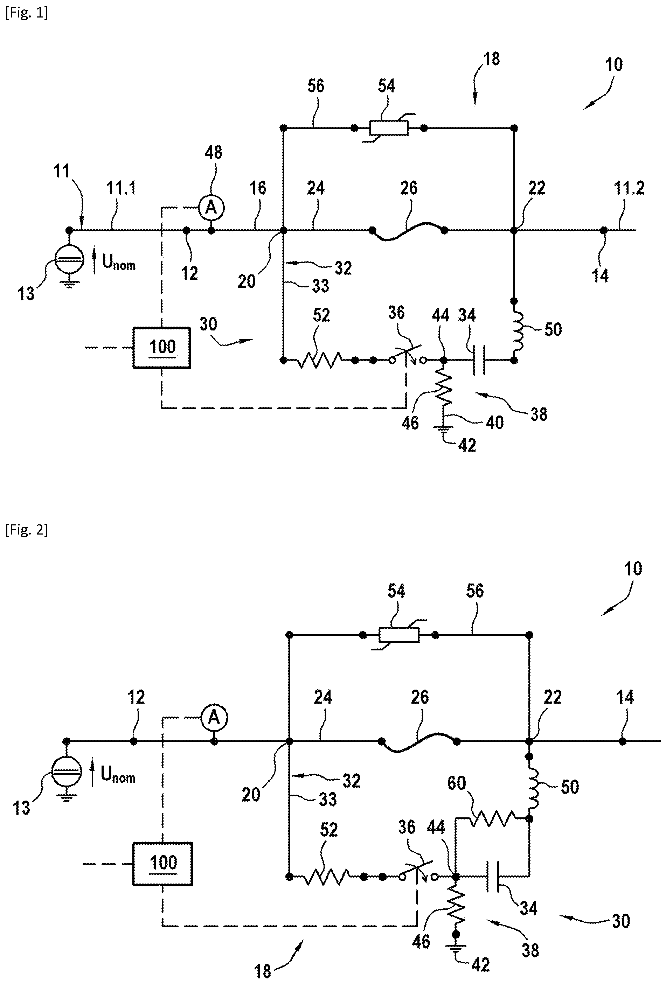

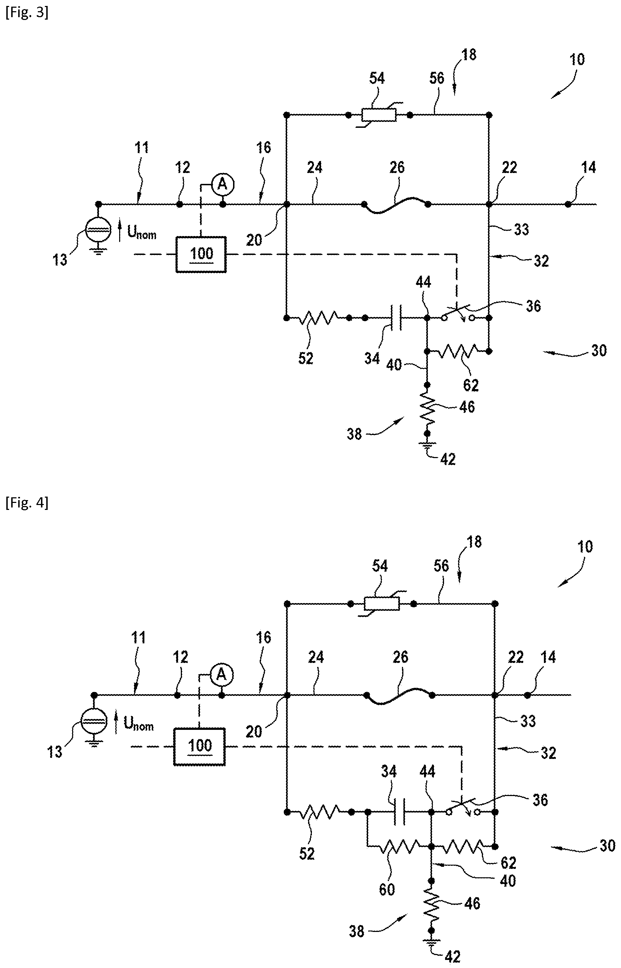

L'enclencheur de surcharge 36 est interposé dans le conducteur de surcharge 33 de la branche de surcharge 32, l'enclencheur de surcharge 36 et le condensateur de surcharge 34 étant interposés successivement l'un à l'autre dans le conducteur de surcharge 33 de la branche de surcharge 32 entre le premier point 20 et le second point 22 du module de coupure 18. L'enclencheur de surcharge 36 et le condensateur de surcharge 34 peuvent être agencés dans un ordre ou dans l'autre dans le conducteur de surcharge 33 de la branche de surcharge 32, comme on peut le voir par exemple en comparant d'une part les figures 1 et 2, et d'autre part les figures 3 à 6.

L'enclencheur 36 peut basculer de manière réversible d'un état ouvert à état fermé. Dans son état ouvert, l'enclencheur de surcharge 36 empêche la circulation de courant électrique dans le conducteur de surcharge 33 de la branche de surcharge 32, et, dans son état fermé, l'enclencheur de surcharge 36 autorise la circulation de courant de manière bidirectionnelle dans le conducteur de surcharge 33 de la branche de surcharge 32. L'enclencheur de surcharge 36 est donc un interrupteur bidirectionnel. On remarque cependant que, comme on le comprendra du fonctionnement du dispositif, l'enclencheur de surcharge 36 n'a pas besoin d'être dimensionné pour interrompre un courant de charge lors du passage de son état fermé à son état ouvert, et encore moins pour interrompre un courant de défaut lors du passage de son état fermé à son état ouvert. En d'autres termes, l'enclencheur de surcharge 36 n'a pas besoin d'être dimensionné comme un disjoncteur.

L'enclencheur de surcharge 36 est de préférence un interrupteur statique, par exemple un interrupteur à semi-conducteurs ou un interrupteur à tube(s) électronique(s) ou à éclateur(s), qui permet d'obtenir un temps de réaction très rapide, favorable à une mise en action rapide du système de surcharge 30, donc à une interruption rapide du courant par le dispositif de coupure 10. Toutefois, on peut aussi envisager que l'enclencheur de surcharge 36 comporte un interrupteur mécanique ou soit réalisé sous la forme d'un interrupteur mécanique.

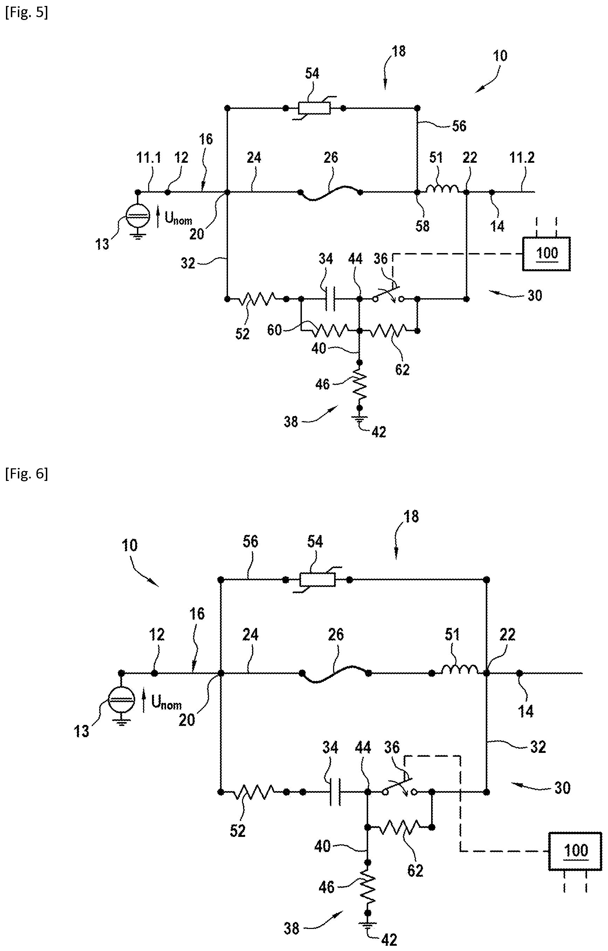

L'enclencheur de surcharge 36 bidirectionnel peut par exemple être réalisé sous la forme d'un assemblage d'interrupteurs unidirectionnels, par exemple un assemblage en parallèle de deux thyristors montés tête-bêche. Un tel assemblage est analogue à un TRIAC. Cependant, d'autres composants à semi-conducteurs pourraient être utilisés, comme par exemple des IGBTs. De même, on peut utiliser un assemblage en parallèle d'un thyristor et d'une diode montés tête-bêche. Toutefois, comme on le verra plus particulièrement pour l'exemple de la figure 5 et pour celui de la figure 6, un ou plusieurs tubes électroniques ou un ou plusieurs éclateurs commandés ou non commandés peuvent aussi être utilisés pour la réalisation de l'enclencheur de surcharge 36, par exemple avec deux tubes électroniques montés tête-bêche ou un éclateur, l'enclencheur de surcharge 36 étant dans ce cas aussi un interrupteur statique bidirectionnel.

Dans la configuration de conduction du dispositif de coupure 10, l'enclencheur de surcharge 36 est dans son état ouvert de sorte qu'il empêche tout passage de courant dans le conducteur de surcharge 33 de la branche de surcharge 32 entre le premier point 20 et le second point 22 du module 18.

Au contraire, dans la configuration de surcharge du dispositif de coupure 10, en présence d'un courant de défaut dans la branche principale 24 que l'on souhaite couper, l'enclencheur de surcharge 36 est amené dans son état fermé pour permettre la décharge du condensateur de surcharge 34 dans la branche principale 24 en créant un courant de surcharge oscillant qui, dans la branche principale 24, au cours d'une demi-période d'oscillation se superpose au courant de défaut en l'augmentant en valeur absolue. En effet, en amenant l'enclencheur de surcharge 36 dans son état fermé, on met en communication électrique une des armatures du condensateur de surcharge 34 avec le premier point 20 et l'autre des armatures du condensateur de surcharge 34 avec le second point 22, ce qui permet donc la décharge du condensateur de surcharge 34 dans la branche principale 24. Ainsi, le système de surcharge 30 permet de provoquer l'accroissement de courant au travers du fusible 26 au point d'en assurer la fusion, y compris pour des valeurs de courant de défaut qui, sans cet accroissement, n'entraîneraient pas la fusion du fusible 26.

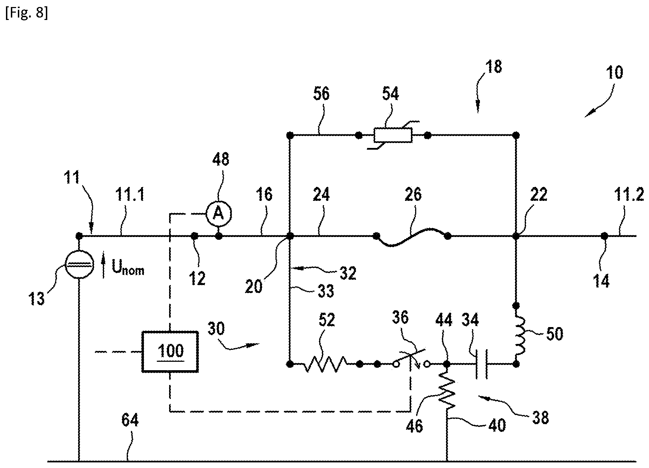

Comme indiqué ci-dessus, le système de surcharge 30 a pour fonction de créer, lors de l'apparition d'un courant de défaut, tout au moins dans certaines conditions, un courant de surcharge. Pour cela, dans les modes de réalisation illustrés, le système de surcharge 30 comporte de plus un circuit de pré-charge 38 du condensateur de surcharge 34. Dans les exemples illustrés, le circuit de pré-charge 38 est un circuit qui tire son énergie électrique de la puissance électrique circulant dans le conducteur électrique 11. Par exemple, le circuit de pré-charge 38 du condensateur de surcharge 34 comporte une ligne de fuite 40 vers une référence de potentiel. Dans les exemples des figures 1 à 7, le potentiel de référence est la terre 42, compte-tenu fait que, dans ces exemples, la source de potentiel 13 établit une haute tension continue entre le conducteur 11 et la terre. Toutefois on a illustré sur la figure 8 une variante d'installation dans laquelle la source de potentiel 13 établit une haute tension continue entre le conducteur 11, qui forme donc un premier pôle d'une ligne de transmission de puissance électrique, ayant une première polarité, et un autre conducteur qui forme un deuxième pôle 64 ayant une deuxième polarité différente de la première polarité, par exemple opposée à la première polarité. On note que cette variante d'installation à deux pôles, qui dans l'exemple de la figure 8 est illustrée pour un dispositif de coupure identique à celui de la figure 1, pourrait être déclinée pour tous les modes de réalisation des figures 2 à 7. Dans les deux cas, la ligne de fuite 40 s'étend entre la référence de potentiel 42, 64 et un point de piquage 44 dans la branche de surcharge 32, le point de piquage 44 étant agencé dans le conducteur de surcharge 33 de la branche de surcharge 32 entre le condensateur de surcharge 34 et l'enclencheur de surcharge 36. Bien entendu, la ligne de fuite 40 présente une résistance électrique, qui est par exemple réalisée sous la forme d'un composant résistif 46 ayant une valeur de résistance électrique R46, ceci afin de limiter la valeur du courant de fuite susceptible de s'écouler vers la référence de potentiel 42, 64. On note que l'on ne préjuge pas ici du sens de circulation du courant dans la ligne de fuite, qui dépend des potentiels respectifs du conducteur 11 et de la référence de potentiel 42, 64.

Par la disposition du point de piquage 44 entre le condensateur de surcharge 34 et l'enclencheur de surcharge 36, on crée un circuit électrique entre le conducteur électrique 11 et la référence de potentiel 42, 64, circuit électrique dans lequel est interposé le condensateur de surcharge 34, et circuit électrique qui n'est pas interrompu par l'enclencheur de surcharge 36 même lorsque celui-ci est dans son état ouvert. Lorsqu'une tension électrique est disponible dans le conducteur électrique 11, par exemple lorsque le conducteur électrique 11 est portée à la tension opérationnelle, une partie de la puissance électrique disponible est donc dérivée par le circuit de pré-charge 38 pour pré-charger le condensateur de surcharge 34.

Cependant, le circuit de pré-charge 38 pourrait prendre d'autres formes, et pourrait par exemple disposer d'une autre source de puissance électrique, éventuellement une source de puissance électrique dédiée.

Dans les exemples illustrés, le circuit de précharge 38 est dépourvu d'interrupteur. Cependant, on pourrait prévoir un interrupteur commandé dans la ligne de fuite 40 vers la référence de potentiel 42, 64.

Comme dans les exemples illustrés, le dispositif de coupure 10 peut comprendre une unité de commande électronique 100 qui est programmée pour, en présence d'un courant de défaut dans le circuit principal 16, commander l'enclencheur de surcharge 36 vers son état fermé. L'unité de commande électronique 100 comprend typiquement au moins un processeur ou microcontrôleur ou FPGA et au moins une mémoire électronique, et peut comprendre ou être reliée à un ou plusieurs circuits électroniques de communication, par exemple de communication avec un ou plusieurs réseaux informatiques, et/ou un ou plusieurs circuits électroniques d'interface, et/ou un ou plusieurs circuits électroniques d'entrée/de sortie. Une unité de commande électronique peut comprendre ou être associée à plusieurs afficheurs. L'unité de commande électronique 100 peut comprendre ou être associée à un ou plusieurs capteurs, par exemple un ou plusieurs capteurs d'intensité et/ou un ou plusieurs capteurs de tension, configuré(s) pour mesurer une valeur d'un paramètre physique dans le dispositif de coupure 10 ou dans l'installation électrique dans laquelle le dispositif 10 et destiné à être intégré. Dans certains des exemples illustrés, on a par exemple représenté un capteur d'intensité de courant électrique 48, par exemple un ampèremètre, configuré pour mesurer l'intensité du courant dans le circuit principal 16, cet ampèremètre 48 étant relié à l'unité de commande électronique 100 afin que celle-ci puisse disposer de l'information relative à l'intensité du courant électrique dans le circuit principal 16, donc aussi dans le conducteur électrique 11.

La ou les unité(s) de commande électronique(s) 100 est/sont programmées pour mettre en œuvre tout ou partie d'un procédé de commande du dispositif. Avantageusement, on pourra prévoir que la ou les unités de commande électronique(s) 100 communiquent leurs ordres de commande/pilotage, notamment à l'enclencheur de surcharge 36, par des signaux isolés galvaniquement par rapport à la haute tension continue. Ces signaux peuvent être des signaux optiques transportés par des fibres optiques. Ils peuvent être des signaux électriques isolés par des transformateurs. Ces signaux peuvent être des signaux électromagnétiques transportés par des liaisons de communication sans fil.

La branche principale 24 et la branche de surcharge 32 forment une boucle ayant une inductance et une capacité qui sont dimensionnées pour que, dans la configuration de surcharge du dispositif de coupure 10, la décharge du condensateur de surcharge 34 provoque une injection de courant oscillant dans la boucle formée par la branche principale 24 et la branche de surcharge 32. En effet, avec un dimensionnement de la boucle générant un courant oscillant, on pourra d'une part maximiser l'intensité de crête du courant injecté pour une quantité donnée d'énergie disponible dans le condensateur 34, et on pourra d'autre part s'assurer d'une efficacité du système de surcharge 30 à provoquer la fusion du fusible 26 quel que soit le sens de circulation du défaut dans le circuit principal 16, donc quelle que soit la localisation du défaut par rapport au dispositif 10 dans le conducteur 11 de la ligne électrique dans laquelle le dispositif 10 est inséré.

Dans les exemples illustrés aux figures 1, 2 et 5 à 8, la boucle formée par la branche principale 24 et la branche de surcharge 32 comporte un composant inductif dédié 50, 51, par exemple une bobine ou un circuit en matériau magnétique (par exemple comprenant du fer doux). Dans les exemples illustrés aux figures 1, 2 et 7, le composant inductif dédié 50 est interposé dans le conducteur de surcharge 33 de la branche de surcharge 32. Dans les exemples des figures 5 et 6, on a illustré un composant inductif dédié 51 interposé dans la branche principale 24. Bien entendu, on pourrait avoir des composants inductifs dédiés à la fois dans la branche de surcharge 32 et dans la branche principale 24. Inversement, la boucle formée par la branche principale 24 et la branche de surcharge 32 peut ne pas comporter de composant inductif dédié, mais peut dans ce cas présenter une inductance due aux inductances parasites des éléments inclus dans la boucle formée par la branche principale 24 et la branche de surcharge 32, ce qui est représenté pour les exemples des figures 3 et 4.

Typiquement, l'inductance de la boucle formée par la branche principale 24 et la branche de surcharge 32 peut être considérée comme une inductance qui, dans la boucle, est en série dans la boucle avec la capacité du condensateur de surcharge 34.

De même, la boucle formée par la branche principale 24 et la branche de surcharge 32 peut présenter une résistance, soit sous la forme d'une résistance parasite, celle des composants inclus dans la boucle, soit sous la forme d'un composant résistif dédié 52 ayant une valeur de résistance électrique R52 comme illustré sur les figures. Dans ce cas, la résistance de la boucle peut être considérée comme une résistance en série avec l'inductance de la boucle et avec la capacité du condensateur de surcharge 34.

Au total, la boucle ainsi formée par la branche de surcharge 32 et par la branche principale 24 forment donc un circuit LC en série ou un circuit RLC en série, oscillant. En fonction des niveaux de tension et du dimensionnement des composants, il est aisé de dimensionner la capacité et l'inductance pour faire de la boucle une boucle oscillante dans laquelle la décharge du condensateur se fait sous la forme d'une oscillation de courant. En faisant ainsi, on s'assure que le courant de surcharge qui est injecté par le système de surcharge 30 dans la branche principale 24 aura tendance à parcourir la branche principale 24 d'abord dans un sens lors d'une première demi-période de l'oscillation du courant de surcharge, puis, immédiatement après, dans l'autre sens lors de la demi-période suivante de l'oscillation du courant décharge. Ainsi, au cours de l'une ou l'autre de ces deux demi-périodes, le courant de surcharge délivré par le condensateur de surcharge 34 va nécessairement s'additionner en valeur absolue avec le courant de défaut qui parcourt le dispositif de coupure 10 par la branche principale 24. Cette addition en valeur absolue est obtenue quel que soit le sens initial du courant de défaut au travers du dispositif de coupure 10, et quel que soit le sens de pré-charge du condensateur de surcharge 34. Avec une telle disposition, le système de surcharge 30 sera efficace pour provoquer l'accroissement de courant au travers du fusible 26 au point d'en assurer la fusion, y compris pour des valeurs de courant de défaut qui, sans cet accroissement, n'entraînerait pas la fusion du fusible 26, et ceci quel que soit donc le sens du courant de défaut et quel que soit le sens de chargement du condensateur de surcharge 34. Cette propriété n'est cependant obtenue que si l'enclencheur de surcharge 36 est bidirectionnel, c'est-à-dire conçu pour, dans son état fermé, permettre la circulation de courant dans les deux sens à son travers.

Toutefois, même avec un système de surcharge 30 bidirectionnel comme décrit ci-dessus, il sera avantageux de configurer le système de telle sorte que l'accroissement d'intensité courant dans le fusible 26 soit obtenu dès la première demi-période d'oscillation du courant de surcharge. Pour cela, on fera en sorte que l'armature du condensateur de surcharge 34 qui est au potentiel le plus différent de la référence de potentiel 42, 64 soit reliée à la borne du fusible 26 qui est connectée à la partie de réseau qui a le plus de probabilités de rester saine.

Dans les exemples illustrés, le module de coupure 18 comprend au moins un parasurtenseur général 54 qui est agencé électriquement en parallèle du fusible 26. Le rôle du parasurtenseur est d'absorber l'énergie excédentaire dans le circuit électrique, notamment l'énergie magnétique excédentaire, lorsque le fusible 26 a fondu. De plus, le parasurtenseur permet aussi de limiter la tension transitoire d'interruption.

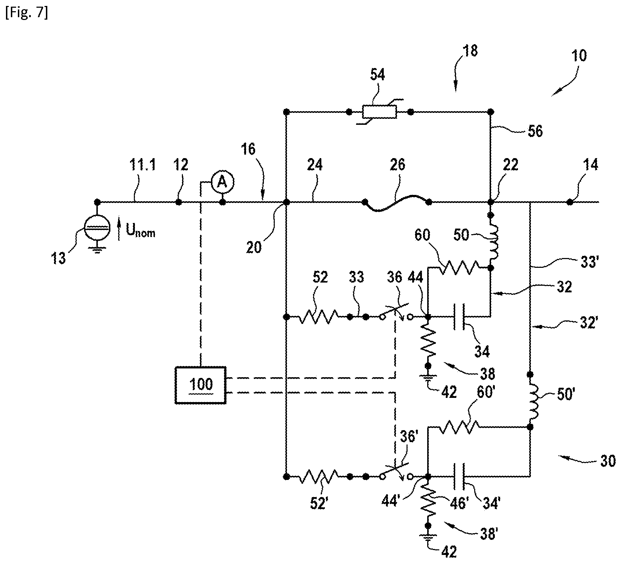

Dans les modes de réalisation illustrés aux figures 1 à 4, et à la figure 7, le module de coupure 18 comprend une branche d'absorption 56, qui est agencée électriquement en parallèle de la branche principale 24 et de la branche de surcharge 32 entre le premier point 20 et le second point 22 du module de coupure 18, et le parasurtenseur général 54 est interposé dans la branche d'absorption 56 entre le premier point 20 et le second point 22. En revanche, dans l'exemple illustré à la figure 5, dans lequel on trouve un composant inductif dédié 51 interposé dans la branche principale 24 entre le premier point 20 et le second point 22, on peut voir que le parasurtenseur général 54 est agencé électriquement en parallèle du fusible 26, mais la branche d'absorption 56 s'étend entre le premier point 20 et un point de jonction 58 qui se trouve dans la branche principale 24 entre le fusible 26 et le composant inductif dédié 51. A contrario, dans l'exemple illustré à la figure 6, dans lequel on trouve aussi un composant inductif dédié 51 interposé dans la branche principale 24 entre le premier point 20 et le second point 22, le parasurtenseur général 54 est agencé électriquement en parallèle du fusible 26 et du composant inductif dédié 51 puisque, dans cette disposition, la branche d'absorption 56 s'étend entre le premier point 20 et le second point 22.

On pourrait aussi prévoir qu'un parasurtenseur soit agencé directement en parallèle du condensateur de surcharge 34.

Dans les exemples des figures 2, 3 et 4, on a illustré des moyens pour pouvoir adapter la tension maximale à laquelle doit résister l'enclencheur de surcharge 36 et/ou le condensateur de surcharge 34.

Par exemple, sur la figure 2, on a illustré la possibilité de mettre, électriquement en parallèle du condensateur de surcharge 34, directement en parallèle aux bornes de celui-ci, une résistance de protection de condensateur 60 ayant une valeur de résistance électrique R60. De la sorte, en fonctionnement continu lorsque l'enclencheur de surcharge 36 est dans son état ouvert, la tension U34 aux bornes du condensateur de surcharge 34 est au maximum égale à :

$$U34 = Unom \times R60 / (R60+R46)$$

Ainsi, par un choix judicieux des valeurs de résistance R60 et R46, on peut faire en sorte que la tension la tension maximale à laquelle doivent résister le condensateur de surcharge 34 et l'enclencheur de surcharge 36 soit inférieure, voire notablement inférieure à la tension nominale de service Unom du réseau. On pourra ainsi trouver le compromis le plus favorable, notamment d'un point de vue encombrement et coût des composants, entre la valeur de capacité du condensateur de surcharge 34 et la tension maximale à laquelle doivent résister le condensateur de surcharge 34 et l'enclencheur de surcharge 36.

On note que la résistance de protection de condensateur 60, ainsi agencée, directement en parallèle aux bornes du condensateur de surcharge 34, forme un circuit de décharge du condensateur de surcharge 34 pour les opérations de maintenance et ceci indépendamment de l'état du fusible 26, c'est-à-dire qu'il soit fondu ou non. En effet, lorsque le dispositif 10 n'est plus sous tension, par exemple lorsque le conducteur 11 a été isolé du réseau, l'énergie électrique contenue dans le condensateur de surcharge 34 se décharge progressivement dans la résistance de protection de condensateur 60. On notera qu'il faudra veiller à ce que la constante de temps qui régit cette décharge dans la résistance de protection de condensateur 60 soit largement supérieure à la constante de temps de décharge du condensateur de surcharge 34 dans la branche principale 24 lorsque l'enclencheur de surcharge 36 est amené dans son état fermé.

Sur la figure 3, on a illustré la possibilité de mettre, électriquement en parallèle de l'enclencheur de surcharge 36, directement en parallèle aux bornes de celui-ci, une résistance de protection d'enclencheur 62 ayant une valeur de résistance électrique R62. De la sorte, en fonctionnement continu lorsque l'enclencheur de surcharge 36 est dans son état ouvert, la tension U36 aux bornes de l'enclencheur de surcharge 36 est au maximum égale à :

$$U36 = Unom \times R62 / (R62+R46)$$

Ainsi, par un choix judicieux des valeurs de résistance R62 et R46, on peut faire en sorte que la tension maximale à laquelle doit résister l'enclencheur de surcharge 36 soit inférieure, voire notablement inférieure à la tension nominale de service Unom du réseau, ce qui permet d'en réduire le coût et l'encombrement. Tant que le fusible n'est pas fondu, cette résistance permet aussi une décharge lente du condensateur de surcharge 34 pour permettre d'effectuer une maintenance.

Sur la figure 4, on a illustré la combinaison des deux possibilités précédentes, avec, électriquement en parallèle du condensateur de surcharge 34, directement en parallèle aux bornes de celui-ci, une résistance de protection de condensateur 60 ayant une valeur de résistance électrique R60, et, électriquement en parallèle de l'enclencheur de surcharge 36, directement en parallèle aux bornes de celui-ci, une résistance de protection d'enclencheur 62 ayant une valeur de résistance électrique R60.

Dans les exemples de la figure 5 et de la figure 6, on a illustré deux modes de réalisation dans lesquels l'enclenchement du système de surcharge 30, par fermeture de l'enclencheur de surcharge 36, peut être obtenu, au moins pour certaines conditions de courant de défaut, de manière automatique, sans nécessairement faire appel à une commande électronique de l'enclencheur de surcharge 36.

Dans ces deux exemples, l'enclencheur de surcharge 36 présente, dans son état ouvert, une valeur maximale de tenue en tension au-delà de laquelle il bascule automatiquement dans son état fermé, ceci sans destruction de l'enclencheur de surcharge 36, donc de manière réversible. En d'autres termes, lorsqu'une tension est appliquée aux bornes de l'enclencheur de surcharge 36 qui dépasse la valeur maximale de tenue en tension, il bascule automatiquement dans son état fermé, sans commande extérieure, notamment sans commande électronique extérieure. Dans les modes de réalisation des figures 5 et 6 , on a illustré une résistance de protection 62 en parallèle de l'enclencheur 36. Cela a pour effet de diminuer la tension aux bornes de l'enclencheur 36, donc d'augmenter le point d'auto-enclenchement. Cela peut être mis à profit notamment pour des valeurs tension nominale de service Unom élevées.

Typiquement, l'enclencheur de surcharge 36 peut, pour de tels modes de réalisation notamment, être réalisé sous la forme d'un ou plusieurs tube(s) électronique(s) ou éclateur(s) pour lesquels cette faculté de bascule automatique vers l'état fermé peut se faire sans détériorer l'interrupteur. Dans ces deux exemples, la branche principale 24 présente une inductance dimensionnée pour créer une tension aux bornes de la branche principale 24 qui s'additionne à la tension aux bornes du condensateur de surcharge 34 de manière à ce que la somme des deux tensions soit supérieure à la valeur maximale de tenue en tension de l'enclencheur de surcharge 36 lorsqu'une vitesse de variation de courant (dI24/dt) dans la branche principale 24 dépasse une valeur admissible prédéterminée. Dans les deux exemples illustrés, cette inductance est illustrée sous la forme d'un composant inductif dédié 51 qui est interposé dans la branche principale 24 entre le premier point 18 et le second point 22. Cependant, là encore, cette inductance pourrait résulter en tout ou partie d'inductances parasites dans cette branche principale 24. De la sorte, on comprend qu'en présence d'un courant de défaut présentant une très forte vitesse de variation, supérieure à la vitesse de variation admissible, une tension apparaît aux bornes de l'inductance de la branche principale 24, donc aux bornes de la branche principale 24, tension qui s'additionne à la tension du condensateur de surcharge 36 et s'applique aux bornes de l'enclencheur de surcharge 36 et qui en provoque le passage à l'état fermé, ce qui enclenche la décharge du condensateur de surcharge 34 comme décrit ci-dessus. Avec un tel mode de réalisation, il est possible de se passer d'une unité électronique de commande de l'enclencheur de surcharge 36. Cependant, comme illustré aux figures 5 et 6, de tels modes de réalisation peuvent aussi s'utiliser avec des éclateurs commandés ou tubes électroniques commandés (qui passent dans leur état fermé naturellement au-delà d'une tension seuil) et mettre en œuvre une unité électronique de commande comme décrit ci-dessus, par exemple pour provoquer un enclenchement du système surcharge 30 pour des courants ayant une vitesse de variation insuffisante pour provoquer l'enclenchement automatique.

Il sera avantageux de configurer le système de telle sorte que l'accroissement d'intensité courant dans le fusible 26 soit obtenu dès le démarrage de l'augmentation de tension aux bornes de l'inductance 51. Pour cela, on fera en sorte que l'armature du condensateur de surcharge 34 qui est au potentiel le plus différent de la référence de potentiel 42, 64 soit reliée à la borne du fusible 26 qui est connectée à la partie de réseau qui a le plus de probabilités de d'apparition d'un défaut.

A la figure 7, on a illustré la possibilité d'avoir un module de coupure 18 comprenant, en plus d'une branche de surcharge 32 telle que décrite ci-dessus, en parallèle de la branche principale 24 et de la branche de surcharge 32, une branche de surcharge additionnelle 32' ayant un conducteur de surcharge additionnel 33' qui s'étend entre le premier point 20 et le second point 22 du module de coupure 18.

Dans l'exemple illustré, la branche de surcharge additionnelle 32' est de structure identique à la branche de surcharge 32, et il a été choisi de représenter le cas où la branche de surcharge 32 est identique à celle décrite en référence au mode de réalisation de la figure 2. Au-delà de la structure identique entre la branche de surcharge additionnelle 32' et la branche de surcharge 32, les deux branches peuvent avoir le même dimensionnement de leurs composants, notamment pour ce qui concerne la capacité électrique C34, C34' de leurs condensateurs de surcharge respectifs.

Dans tous les cas, un module de coupure 18 ayant une telle branche de surcharge additionnelle 32' comprend :

- au moins un condensateur de surcharge additionnel 34' qui est interposé dans le conducteur de surcharge additionnel 33' de la branche de surcharge additionnelle 32', entre le premier point 20 et le second point 22 du module de coupure 18,
- un enclencheur de surcharge additionnel 36', bidirectionnel, qui est interposé dans le conducteur de surcharge additionnel 33' de la branche de surcharge additionnelle 32', l'enclencheur de surcharge additionnel 36' et le condensateur de surcharge additionnel 34' étant interposés successivement l'un à l'autre dans le conducteur de surcharge additionnel 33' de la branche de surcharge additionnelle 32' entre le premier point 20 et le second point 22 du module de coupure 18, l'enclencheur additionnel 36' empêchant, dans un état ouvert, la circulation de courant électrique dans la branche de surcharge additionnelle 32' entre le premier point 20 et le second point (22) du module de coupure, et l'enclencheur additionnel 36' autorisant, dans un état fermé, la circulation de courant de manière bidirectionnelle dans la branche de surcharge additionnelle 32' entre le premier point 20 et le second point 22 du module de coupure.

De même, il est prévu un circuit de pré-charge 38' du condensateur de surcharge additionnel 34'. Dans l'exemple ce circuit de pré-charge 38' est de structure identique à celui décrit plus haut.

Dans la configuration de conduction du dispositif 10, l'enclencheur de surcharge additionnel 36' est dans son état ouvert. Dans une configuration de surcharge du dispositif 10, l'enclencheur de surcharge additionnel 32' est dans son état fermé pour permettre la décharge du condensateur de surcharge additionnel 34' dans la branche principale 24 en créant un courant de décharge additionnel oscillant qui, dans la branche principale 24, au cours d'au moins une demi-période d'oscillation, s'ajoute en valeur absolue au courant de défaut circulant dans la branche principale 24.

Typiquement, l'enclencheur de surcharge additionnel 36' sera commandé lui aussi par l'unité de commande électronique 100, et de préférence, l'enclencheur de surcharge additionnel 36' et l'enclencheur de surcharge 36 sont commandés pour passer à leur état fermé en même temps.

Un tel module de coupure peut être avantageux pour mettre en œuvre des enclencheurs de surcharge 36, 36' qui ont un pouvoir de conduction limité en termes de "charges transférées", c'est à dire en charge cumulée qui a traversé l'enclencheur. Il faut cependant veiller à ce que les enclencheurs 36, 36' soient amenés simultanément dans leur état fermé, pour que les amplitudes de courant de décharge s'additionnent dans la branche principale 24, ce qui est de préférence mis en œuvre en utilisant des enclencheurs commandés déclenchés en même temps.

Dans l'exemple de la figure 7, on retrouve la possibilité de prévoir un parasurtenseur général 54, avec, dans cet exemple, la branche d'absorption 56, dans laquelle est interposé le parasurtenseur général 54, qui est agencée électriquement en parallèle de la branche de surcharge additionnelle 32' entre le premier point 20 et le second point 22 du module de coupure 18.

On va maintenant décrire un exemple d'une méthode de dimensionnement d'un dispositif de coupure 10 selon l'invention.

On cherche à ce que la boucle formée par la branche principale 24 et la branche de surcharge 32 forme une boucle oscillante. On se place donc ici dans le cas d'un circuit faiblement amorti, c'est-à-dire par exemple un circuit qui satisfait à la condition suivante :

[Math. 1]

$$\bullet\,52 < 2\bullet\,\overline{(\bullet\,50 + \bullet\,51)/\bullet\,34}$$

Où :

- L50 est la valeur de l'inductance qui est uniquement dans la branche de surcharge 32 ;
- L51 est l'inductance qui est traversée par du courant en exploitation normale, donc dans la branche principale 24
- R52 est la résistance totale de la boucle formée de la branche de surcharge 32 et de la branche principale 24.

On note que, pour des valeurs plus importantes de la résistance totale de la boucle formée de la branche de surcharge 32 et de la branche principale 24, le dispositif peut fonctionner, mais nécessite alors une augmentation de la valeur de la capacité du condensateur de surcharge 34, donc de son coût et de son volume.

On peut alors déterminer la demi-période d'oscillation T/2 du courant de surcharge provoqué par la décharge du condensateur de surcharge 34 selon la relation :

[Math. 2]

$$\frac{\bullet}{2} = \bullet\,\bullet\,\overline{\bullet\,34 \bullet (\bullet\,50 + \bullet\,51)}$$

De même, on peut alors déterminer un courant de crête Ipk du courant de décharge du condensateur de surcharge 34 obtenu en supposant que R52 est nul ou négligeable, qui est donné par la relation :

[Math. 3]

$$\bullet\,\bullet\,\bullet = \bullet\,34\bullet\,\overline{\frac{\bullet\,34}{\bullet\,50 + \bullet\,51}}$$

Où :

- U34 est la tension de charge aux bornes du condensateur de surcharge 34.

On cherche alors à déterminer le paramètre caractéristique « I$^2$t » d'une demi-période d'oscillation du courant de décharge du condensateur de surcharge 34 en négligeant la contribution du courant I24 circulant dans la branche .

La valeur de ce paramètre caractéristique est déterminée par intégration de l'amplitude de crête Ipk d'un courant harmonique sur une demi-période :

[Math. 4]

$$\bullet\ ^{\bullet}\bullet = \bullet\ \frac{\bullet\ /\bullet}{\bullet}\ \bullet\bullet\bullet\ ^{\bullet}\bullet\bullet$$

En fonction des relations ci-dessus, le paramètre caractéristique « $I^2t$ » d'une demi-période d'oscillation du courant de décharge du condensateur de surcharge 34 s'exprime sous les formes successives suivantes :

[Math. 5]

$$\bullet\ ^{\bullet}\bullet = \bullet\ \frac{\overline{\bullet\bullet\bullet\bullet\bullet(\bullet\bullet\bullet\bullet\bullet)}}{\bullet}\ \bullet\bullet\ 34\bullet\ \frac{\bullet\ 34}{\bullet 50 + \bullet 51}\ \bullet\bullet\bullet\ \bullet\ \frac{\bullet}{\overline{\bullet\bullet 34 \bullet (\bullet 50 + \bullet 51)}}\ ^{\bullet}\bullet\bullet\bullet$$

Pour le dimensionnement de la boucle, on peut alors faire en sorte que le paramètre caractéristique « $I^2t$ » d'une demi-période d'oscillation du courant de décharge du condensateur de surcharge 34, tel que défini par la relation ci-dessus, soit supérieur ou égal au paramètre « $I^2t$ » du fusible 26, qui est une donnée caractéristique fournie par le constructeur du fusible 26.

Lorsque la valeur R52 de la résistance 52 augmente notablement, il y a de l'amortissement dans la boucle et la valeur du paramètre caractéristique « $I^2t$ » d'une demi-période d'oscillation du courant de décharge du condensateur de surcharge 34 diminue. Il faut donc dans ce cas, augmenter la valeur de la capacité du condensateur de surcharge 34, ou, avec un diviseur de tension, augmenter la tension U34 aux bornes du condensateur de surcharge 34.

Les dispositifs de coupure ci-dessus représentent des exemples de dispositifs qui permettent de mettre en œuvre un procédé de coupure d'un courant électrique sous haute tension continue, dans lequel la coupure du courant électrique est assurée par la fusion d'un fusible 26 qui est interposé dans une branche principale 24 dans laquelle circule, dans une phase de conduction nominale, un courant électrique opérationnel, et dans lequel le procédé comporte :

- une étape de stockage d'une énergie électrique dans un système de surcharge 30 ;
- une étape de génération, par le système de surcharge 30, d'un courant de surcharge oscillant qui, dans la branche principale 24, au cours d'au moins une demi-période d'oscillation, s'ajoute au courant de défaut en valeur absolue pour assurer la fusion du fusible 26.

Dans certains modes de réalisation, ou tout du moins dans certaines conditions de courant et de tension, l'étape de génération d'un courant de surcharge oscillant est déclenchée par la commande, par exemple au moyen d'une unité électronique de commande 100, d'un enclencheur de surcharge 36, 36' bidirectionnel du système de surcharge 30.

Dans certains modes de réalisation, tels que ceux des figures 5 et 6, et tout du moins dans certaines conditions de courant et de tension, l'étape de génération d'un courant de surcharge oscillant est déclenchée par une tension aux bornes d'une inductance 51 de la branche principale 24 lorsqu'une variation de courant dans la branche principale 24 dépasse une valeur admissible prédéterminée.

## Revendications

1. Dispositif de coupure (10) de courant électrique sous haute tension continue, le dispositif de coupure (10) comportant :

   - un circuit principal (16), dans lequel circule, dans une configuration de conduction du dispositif de coupure, un courant électrique opérationnel sous une haute tension nominale de service continue (Unom) du dispositif ;
   - au moins un module de coupure (18), interposé dans le circuit principal (16) entre un premier point (20) et un second point (22) du circuit principal (16) pour le module de coupure (18), le module de coupure (18) comprenant une branche principale (24), entre le premier point (20) et le second point (22) du module de coupure (18), avec au moins un fusible (26) interposé dans la branche principale (24) entre le premier point (20) et le second point (22), le courant électrique opérationnel circulant, dans une configuration de conduction du dispositif de coupure, dans la branche principale (24),

   et le dispositif de coupure (10) étant du type dans lequel le module de coupure (18) comprend un système de surcharge (30) qui, dans une configuration de surcharge du dispositif, en présence d'un courant de défaut dans le circuit principal (16), est apte à générer un courant de surcharge pour assurer la fusion du fusible (26),
**caractérisé en ce que** le courant de surcharge est un courant oscillant qui, dans la branche principale (24), au cours d'au moins une demi-période d'oscillation, s'ajoute au courant de défaut en valeur absolue pour assurer la fusion du fusible (26).

2. Dispositif selon la revendication 1, **caractérisé en ce que** le système de surcharge (30) comporte, en parallèle de la branche principale (24), une branche de surcharge (32) ayant un conducteur de surcharge (33) qui s'étend entre le premier point (20) et le second point (22) du module de coupure (18),

en ce que le système de surcharge (30) comprend:

- au moins un condensateur de surcharge (34) qui est interposé dans le conducteur de surcharge (33) de la branche de surcharge (32), entre le premier point (20) et le second point (22) du module de coupure (18),
- un enclencheur de surcharge (36) bidirectionnel qui est interposé dans le conducteur de surcharge (33) de la branche de surcharge (32), l'enclencheur de surcharge (36) et le condensateur de surcharge (34) étant interposés successivement l'un à l'autre dans le conducteur de surcharge de la branche de surcharge (32) entre le premier point (20) et le second point (22) du module de coupure, l'enclencheur de surcharge (36) empêchant, dans un état ouvert, la circulation de courant électrique dans la branche de surcharge (32) entre le premier point (20) et le second point (22) du module de coupure, et l'enclencheur de surcharge (36) autorisant, dans un état fermé, la circulation de courant de manière bidirectionnelle dans la branche de surcharge (32) entre le premier point (20) et le second point (22) du module de coupure, et
- un circuit de pré-charge (38) du condensateur de surcharge (34) ;

en ce que dans la configuration de conduction du dispositif, l'enclencheur de surcharge (36) est dans son état ouvert ;
et en ce que dans la configuration de surcharge du dispositif, l'enclencheur de surcharge (34) est dans son état fermé pour permettre la décharge du condensateur de surcharge (34) dans la branche principale (24) en créant un courant de surcharge oscillant qui, au cours d'au moins une demi-période d'oscillation, s'ajoute en valeur absolue au courant de défaut circulant dans la branche principale (24).

3. Dispositif selon la revendication 2, **caractérisé en ce que** le dispositif de coupure (10) comprend une unité de commande électronique (100) qui est programmée pour, en présence d'un courant de défaut dans le circuit principal (16), commander l'enclencheur de surcharge (36) vers son état fermé.

4. Dispositif selon l'une des revendications 2 ou 3, **caractérisé en ce que** l'enclencheur de surcharge (36) présente, dans son état ouvert, une valeur maximale de tenue en tension au-delà de laquelle il bascule automatiquement dans son état fermé, et en ce que la branche principale (24) présente une inductance (51) dimensionnée pour créer une tension aux bornes de la branche principale (24) qui est supérieure à la valeur maximale de tenue en tension de l'enclencheur de surcharge (36) lorsqu'une vitesse de variation de courant dans la branche principale dépasse une valeur admissible prédéterminée.

5. Dispositif selon l'une quelconque des revendications 2 à 4, **caractérisé en ce que** la branche de surcharge (32) comporte un composant résistif dédié interposé dans le conducteur de surcharge (33) entre le premier point (20) et le second point (22) du module de coupure.

6. Dispositif selon l'une quelconque des revendications 2 à 5, **caractérisé en ce que** le module de coupure (18) comprend au moins un parasurtenseur général (54) qui est agencé électriquement en parallèle du fusible (26).

7. Dispositif selon la revendication 6, **caractérisé en ce que** le module de coupure (18) comprend une branche d'absorption (56), qui est agencée électriquement en parallèle de la branche principale (24) et de la branche de surcharge (32) entre le premier point (20) et le second point (22) du module de coupure (18), et en ce que le parasurtenseur général (54) est interposé dans la branche d'absorption (56) entre le premier point (20) et le second point (22).

8. Dispositif selon l'une quelconque des revendications 2 à 7, **caractérisé en ce que** le circuit de pré-charge (38) du condensateur de surcharge (34) comporte une ligne de fuite (40) vers une référence de potentiel (42, 64) qui s'étend entre la référence de potentiel (42, 64) et un point de piquage (44) dans la branche de surcharge (32), le point de piquage (44) étant agencé dans le conducteur de surcharge (33) de la branche de surcharge (32) entre le condensateur de surcharge (34) et l'enclencheur de surcharge (36), la ligne de fuite (40) vers la référence de potentiel (42, 64) comporte un composant résistif (46).

9. Dispositif selon l'une quelconque des revendications 2 à 11, **caractérisé en ce que** l'enclencheur de surcharge (36) est un interrupteur statique bidirectionnel, l'enclencheur de surcharge (36) étant un interrupteur bidirectionnel à semi-conducteurs.

10. Dispositif selon l'une quelconque des revendications 2 à 9, **caractérisé en ce que** le module de coupure (18) comprend, en parallèle de la branche principale (24) et de la branche de surcharge (32), une branche de surcharge additionnelle (32') ayant un conducteur de surcharge additionnel (33') qui s'étend entre le premier point (20) et le second point (22) du module de coupure (18),

   **en ce que** le système de surcharge (30) du module de coupure (18) comprend:

   - au moins un condensateur de surcharge additionnel (34') qui est interposé dans le conducteur de surcharge additionnel (33') de la branche de surcharge additionnelle (32'), entre le premier point (20) et le second point (22) du module de coupure (18),
   - un enclencheur de surcharge additionnel (36') bidirectionnel qui est interposé dans le conducteur de surcharge additionnel de la branche de surcharge additionnelle (32'), l'enclencheur de surcharge additionnel (36') et le condensateur de surcharge additionnel (34') étant interposés successivement l'un à l'autre dans le conducteur de surcharge additionnel de la branche de surcharge additionnelle (32') entre le premier point (20) et le second point (22) du module de coupure (18), l'enclencheur de surcharge additionnel (36') empêchant, dans un état ouvert, la circulation de courant électrique dans la branche de surcharge additionnelle (32') entre le premier point (20) et le second point (22) du module de coupure, et l'enclencheur de surcharge additionnel (36') autorisant, dans un état fermé, la circulation de courant de manière bidirectionnelle dans la branche de surcharge additionnelle (32') entre le premier point (20) et le second point (22) du module de coupure, et
   - un circuit de précharge (38') du condensateur de surcharge additionnel (34') ;

   **en ce que**, dans la configuration de conduction du dispositif, l'enclencheur de surcharge additionnel (36') est dans son état ouvert ;
   et **en ce que**, dans une configuration de surcharge du dispositif, l'enclencheur de surcharge additionnel (36') est dans son état fermé pour permettre la décharge du condensateur de surcharge additionnel (34') dans la branche principale en créant un courant de décharge additionnel oscillant qui, dans la branche principale (24), au cours d'au moins une demi-période d'oscillation, s'ajoute en valeur absolue au courant de défaut circulant dans la branche principale.

11. Dispositif selon l'une quelconque des revendications 2 à 10, **caractérisé en ce que** le module de coupure comprend au moins un circuit de décharge du condensateur de surcharge pour les opérations de maintenance.

12. Dispositif selon l'une quelconque des revendications 2 à 11, en combinaison avec la revendication 12, **caractérisé en ce que** le module de coupure comprend, électriquement en parallèle du condensateur de surcharge (34), une résistance de protection de condensateur (60).

13. Dispositif selon l'une quelconque des revendications 2 à 12, en combinaison avec la revendication 12, **caractérisé en ce que** le module de coupure comprend, électriquement en parallèle de l'enclencheur de surcharge (36), une résistance de protection d'enclencheur (62).

14. Procédé de coupure d'un courant électrique sous haute tension continue, dans lequel la coupure du courant électrique est assurée par la fusion d'un fusible (26) qui est interposé dans une branche principale (24) dans laquelle circule, dans une phase de conduction nominale, un courant électrique opérationnel, dans lequel le procédé comporte :

   - une étape de stockage d'une énergie électrique dans un système de surcharge (30) ;
   - une étape de génération, par le système de surcharge (30) d'un courant de surcharge qui, dans la branche principale (24), se superpose à un courant de défaut pour assurer la fusion du fusible (26),

   **caractérisé en ce que** le courant de surcharge est un courant oscillant qui, dans la branche principale (24), au cours d'au moins une demi-période d'oscillation, s'ajoute au courant de défaut en valeur absolue.

**15.** Procédé selon la revendication 14, **caractérisé en ce que** l'étape de génération d'un courant de surcharge oscillant est déclenchée par la commande d'un enclencheur de surcharge (36) bidirectionnel du système de surcharge (30).

**Patentansprüche**

**1.** Schaltvorrichtung (10) für elektrischen Strom unter hoher Gleichspannung, die Schaltvorrichtung (10) umfassend:

- einen Hauptstromkreis (16), in dem in einer leitenden Konfiguration der Schaltvorrichtung ein elektrischer Betriebsstrom unter einer hohen Nenngleichstrom-Betriebsspannung (Unom) der Vorrichtung fließt;
- mindestens ein Schaltmodul (18), das in den Hauptstromkreis (16) zwischen einem ersten Punkt (20) und einem zweiten Punkt (22) des Hauptstromkreises (16) für das Schaltmodul (18) eingefügt ist, das Schaltmodul (18) umfassend einen Hauptzweig (24) zwischen dem ersten Punkt (20) und dem zweiten Punkt (22) des Schaltmoduls (18), wobei in dem Hauptzweig (24) zwischen dem ersten Punkt (20) und dem zweiten Punkt (22) mindestens eine Sicherung (26) eingefügt ist, wobei der elektrische Betriebsstrom in einer leitenden Konfiguration der Schaltvorrichtung durch den Hauptzweig (24) fließt,

und die Schaltvorrichtung (10) von dem Typ ist, bei dem das Schaltmodul (18) ein Überlastsystem (30) umfasst, das in einer Überlastkonfiguration der Vorrichtung bei Vorhandensein eines Fehlerstroms in dem Hauptstromkreis (16) geeignet ist, um einen Überlaststrom zu erzeugen, um das Schmelzen der Sicherung (26) zu gewährleisten, **dadurch gekennzeichnet, dass** der Überlaststrom ein oszillierender Strom ist, der in dem Hauptzweig (24) während mindestens einer halben Oszillationsperiode in seinem Absolutwert zu dem Fehlerstrom addiert wird, um das Schmelzen der Sicherung (26) zu gewährleisten.

**2.** Vorrichtung nach Anspruch 1, **dadurch gekennzeichnet, dass** das Überlastsystem (30) parallel zu dem Hauptzweig (24) einen Überlastzweig (32) umfasst, der einen Überlastleiter (33) aufweist, der sich zwischen dem ersten Punkt (20) und dem zweiten Punkt (22) des Schaltmoduls (18) erstreckt, dass das Überlastsystem (30) Folgendes umfasst:

- mindestens einen Überlastkondensator (34), der in den Überlastleiter (33) des Überlastzweigs (32) zwischen dem ersten Punkt (20) und dem zweiten Punkt (22) des Schaltmoduls (18) eingefügt ist,
- einen bidirektionalen Überlastschalter (36), der in den Überlastleiter (33) des Überlastzweigs (32) eingefügt ist, wobei der Überlastschalter (36) und der Überlastkondensator (34) nacheinander in den Überlastleiter des Überlastzweigs (32) zwischen dem ersten Punkt (20) und dem zweiten Punkt (22) des Schaltmoduls eingefügt sind, der Überlastschalter (36) in einem offenen Zustand den Fluss von elektrischem Strom in dem Überlastzweig (32) zwischen dem ersten Punkt (20) und dem zweiten Punkt (22) des Schaltmoduls verhindert, und der Überlastschalter (36) in einem geschlossenen Zustand einen bidirektionalen Fluss von elektrischem Strom in dem Überlastzweig (32) zwischen dem ersten Punkt (20) und dem zweiten Punkt (22) des Schaltmoduls zulässt, und
- eine Vorladeschaltung (38) des Überlastkondensators (34); dass in der leitenden Konfiguration der Vorrichtung der Überlastschalter (36) in seinem offenen Zustand ist;

und dass in der Überlastkonfiguration der Vorrichtung der Überlastschalter (34) in seinem geschlossenen Zustand ist, um die Entladung des Überlastkondensators (34) in dem Hauptzweig (24) zu ermöglichen, indem ein oszillierender Überlaststrom erzeugt wird, der während mindestens einer halben Oszillationsperiode in seinem Absolutwert zu dem in dem Hauptzweig (24) fließenden Fehlerstrom addiert wird.

**3.** Vorrichtung nach Anspruch 2, **dadurch gekennzeichnet, dass** die Schaltvorrichtung (10) eine elektronische Steuereinheit (100) umfasst, die programmiert ist, um bei Vorhandensein eines Fehlerstroms in dem Hauptstromkreis (16) den Überlastschalter (36) in seinen geschlossenen Zustand zu steuern.

**4.** Vorrichtung nach einem der Ansprüche 2 oder 3, **dadurch gekennzeichnet, dass** der Überlastschalter (36) in seinem offenen Zustand einen maximalen Spannungshaltewert aufweist, über den hinaus er automatisch in seinen geschlossenen Zustand wechselt, und dass der Hauptzweig (24) eine Induktivität (51) aufweist, die bemessen ist, um eine Spannung an den Klemmen des Hauptzweigs (24) zu erzeugen, die höher ist als der maximale Spannungshaltewert des Überlastschalters (36), wenn eine Stromänderungsgeschwindigkeit in dem Hauptzweig einen vorbestimmten zulässigen Wert überschreitet.

5. Vorrichtung nach einem der Ansprüche 2 bis 4, **dadurch gekennzeichnet, dass** der Überlastzweig (32) eine dedizierte Widerstandskomponente aufweist, die zwischen dem ersten Punkt (20) und dem zweiten Punkt (22) des Schaltmoduls in den Überlastleiter (33) eingefügt ist.

6. Vorrichtung nach einem der Ansprüche 2 bis 5, **dadurch gekennzeichnet, dass** das Schaltmodul (18) mindestens einen allgemeinen Überspannungsableiter (54) umfasst, der elektrisch parallel zu der Sicherung (26) angeordnet ist.

7. Vorrichtung nach Anspruch 6, **dadurch gekennzeichnet, dass** das Schaltmodul (18) einen Absorptionszweig (56) umfasst, der elektrisch zwischen dem ersten Punkt (20) und dem zweiten Punkt (22) des Schaltmoduls (18) parallel zu dem Hauptzweig (24) und dem Überlastzweig (32) angeordnet ist, und dass der allgemeine Überspannungsableiter (54) in den Absorptionszweig (56) zwischen dem ersten Punkt (20) und dem zweiten Punkt (22) eingefügt ist.

8. Vorrichtung nach einem der Ansprüche 2 bis 7, **dadurch gekennzeichnet, dass** die Vorladeschaltung (38) des Überlastkondensators (34) eine Leckageleitung (40) zu einer Potentialreferenz (42, 64) aufweist, die sich zwischen der Potentialreferenz (42, 64) und einem Abzweigpunkt (44) in dem Überlastzweig (32) erstreckt, wobei der Abzweigpunkt (44) in dem Überlastleiter (33) des Überlastzweigs (32) zwischen dem Überlastkondensator (34) und dem Überlastschalter (36) angeordnet ist, die Leckageleitung (40) zu der Potentialreferenz (42, 64) eine Widerstandskomponente (46) aufweist.

9. Vorrichtung nach einem der Ansprüche 2 bis 11, **dadurch gekennzeichnet, dass** der Überlastschalter (36) ein bidirektionaler statischer Schalter ist, wobei der Überlastschalter (36) ein bidirektionaler Halbleiterschalter ist.

10. Vorrichtung nach einem der Ansprüche 2 bis 9, **dadurch gekennzeichnet, dass** das Schaltmodul (18) parallel zu dem Hauptzweig (24) und dem Überlastzweig (32) einen zusätzlichen Überlastzweig (32') umfasst, der einen zusätzlichen Überlastleiter (33') aufweist, der sich zwischen dem ersten Punkt (20) und dem zweiten Punkt (22) des Schaltmoduls (18) erstreckt,

   dass das Überlastsystem (30) des Schaltmoduls (18) Folgendes umfasst:

   - mindestens einen zusätzlichen Überlastkondensator (34'), der in den zusätzlichen Überlastleiter (33') des zusätzlichen Überlastzweigs (32') zwischen dem ersten Punkt (20) und dem zweiten Punkt (22) des Schaltmoduls (18) eingefügt ist,
   - einen bidirektionalen zusätzlichen Überlastschalter (36'), der in den zusätzlichen Überlastungsleiter des zusätzlichen Überlastungszweigs (32') eingefügt ist, wobei der zusätzliche Überlastschalter (36') und der zusätzliche Überlastkondensator (34') nacheinander in den zusätzliche Überlastleiter des zusätzlichen Überlastzweigs (32') zwischen dem ersten Punkt (20) und dem zweiten Punkt (22) des Schaltmoduls (18) eingefügt sind, der zusätzliche Überlastschalter (36') in einem offenen Zustand den Fluss von elektrischem Strom in dem zusätzliche Überlastzweig (32') zwischen dem ersten Punkt (20) und dem zweiten Punkt (22) des Schaltmoduls verhindert, und der zusätzliche Überlastschalter (36') in einem geschlossenen Zustand einen bidirektionalen Fluss von elektrischem Strom in dem zusätzliche Überlastzweig (32') zwischen dem ersten Punkt (20) und dem zweiten Punkt (22) des Schaltmoduls zulässt, und
   - eine Vorladeschaltung (38') des zusätzlichen Überlastkondensators (34');

   dass in der leitenden Konfiguration der Vorrichtung der zusätzliche Überlastschalter (36') in seinem offenen Zustand ist;
   und dass in einer Überlastkonfiguration der Vorrichtung der zusätzliche Überlastschalter (36') in seinem geschlossenen Zustand ist, um die Entladung des zusätzlichen Überlastkondensators (34') in den Hauptzweig durch Erzeugen eines oszillierenden zusätzlichen Entladestroms zu ermöglichen, der in dem Hauptzweig (24) während mindestens einer halben Oszillationsperiode in seinem Absolutwert zu dem in dem Hauptzweig fließenden Fehlerstrom addiert wird.

11. Vorrichtung nach einem der Ansprüche 2 bis 10, **dadurch gekennzeichnet, dass** das Schaltmodul mindestens eine Entladungsschaltung des Überlastkondensators für Wartungsarbeiten umfasst.

12. Vorrichtung nach einem der Ansprüche 2 bis 11 in Kombination mit Anspruch 12, **dadurch gekennzeichnet, dass** das Schaltmodul elektrisch parallel zu dem Überlastkondensator (34) einen Kondensatorschutzwiderstand (60) umfasst.

**13.** Vorrichtung nach einem der Ansprüche 2 bis 12 in Kombination mit Anspruch 12, **dadurch gekennzeichnet, dass** das Schaltmodul elektrisch parallel zu dem Überlastschalter (36) einen Schalterschutzwiderstand (62) umfasst.

**14.** Unterbrechungsverfahren eines elektrischen Stroms unter hoher Gleichspannung, wobei die Unterbrechung des elektrischen Stroms durch das Schmelzen einer Sicherung (26) gewährleistet wird, die in einen Hauptzweig (24) eingefügt ist, in dem in einer nominalen Leitungsphase ein elektrischer Betriebsstrom fließt, wobei das Verfahren Folgendes umfasst:

- einen Schritt eines Speicherns von elektrischer Energie in einem Überlastsystem (30);
- einen Schritt eines Erzeugens, durch das Überlastsystem (30), eines Überlaststroms, der in dem Hauptzweig (24) einen Fehlerstrom überlagert, um ein Schmelzen der Sicherung (26) zu gewährleisten,

**dadurch gekennzeichnet, dass** der Überlaststrom ein oszillierender Strom ist, der zu dem Fehlerstrom in dem Hauptzweig (24) während mindestens einer halben Oszillationsperiode in seinem Absolutwert addiert wird.

**15.** Verfahren nach Anspruch 14, **dadurch gekennzeichnet, dass** der Schritt eines Erzeugens eines oszillierenden Überlaststroms durch die Steuerung eines bidirektionalen Überlastschalters (36) des Überlastsystems (30) ausgelöst wird.

**Claims**

**1.** A device (10) for disconnecting a high-voltage direct electric current, the device (10) including:

- a main circuit (16), in which circulates, in a conducting configuration of the disconnecting device, an operational electric current at a direct-current nominal operating high voltage (Unom) of the device;
- at least one disconnecting module (18), interposed in the main circuit (16) between a first point (20) and a second point (22) of the main circuit (16) for the disconnecting module (18), the disconnecting module (18) comprising a main branch (24), between the first point (20) and the second point (22) of the disconnecting module (18), with at least one fuse (26) interposed in the main branch (24) between the first point (20) and the second point (22), the operational electric current circulating, in a conducting configuration of the disconnecting device, in the main branch (24),

and the disconnecting device (10) being of the type in which the disconnecting module (18) comprises an overload system (30) which, in an overload configuration of the device, in the presence of a fault current in the main circuit (16), is able to generate an overload current to ensure the melting of the fuse (26), **characterized in that** the overload current is an oscillating current which, in the main branch (24), over at least one half-period of oscillation, is added to the fault current in terms of absolute value to ensure the melting of the fuse (26).

**2.** The device as claimed in claim 1, **characterized in that** the overload system (30) includes, in parallel with the main branch (24), an overload branch (32) having an overload conductor (33) which extends between the first point (20) and the second point (22) of the disconnecting module (18), **in that** the overload system (30) comprises:

- at least one overload capacitor (34) which is interposed in the overload conductor (33) of the overload branch (32), between the first point (20) and the second point (22) of the disconnecting module (18),
- a two-way overload making breaker (36) which is interposed in the overload conductor (33) of the overload branch (32), the overload making breaker (36) and the overload capacitor (34) being interposed successively one after the other in the overload conductor of the overload branch (32) between the first point (20) and the second point (22) of the disconnecting module, the overload making breaker (36) preventing, in an open state, the circulation of electric current in the overload branch (32) between the first point (20) and the second point (22) of the disconnecting module, and the overload making breaker (36) permitting, in a closed state, the two-way circulation of current in the overload branch (32) between the first point (20) and the second point (22) of the disconnecting module, and
- a pre-charging circuit (38) of the overload capacitor (34);

**in that** in the conducting configuration of the device, the overload making breaker (36) is in its open state; and **in that** in the overload configuration of the device, the overload making breaker (34) is in its closed state to permit the discharging of the overload capacitor (34) into the main branch (24), creating an oscillating overload current which, over at least one half-period of oscillation, is added in terms of absolute value to the fault current circulating in the main branch (24).

3. The device as claimed in claim 2, **characterized in that** the disconnecting device (10) comprises an electronic control unit (100) which is programmed to, in the presence of a fault current in the main circuit (16), command the overload making breaker (36) to enter its closed state.

4. The device as claimed in one of claims 2 or 3, **characterized in that** the overload making breaker (36) has, in its open state, a maximum voltage withstand value above which it automatically switches to its closed state, and **in that** the main branch (24) has an inductance (51) dimensioned to create a voltage across the terminals of the main branch (24) which is greater than the maximum voltage withstand value of the overload making breaker (36) when a current variation speed in the main branch exceeds a given permissible value.

5. The device as claimed in any of claims 2 to 4, **characterized in that** the overload branch (32) includes a dedicated resistive component interposed in the overload conductor (33) between the first point (20) and the second point (22) of the disconnecting module.

6. The device as claimed in any of claims 2 to 5, **characterized in that** the disconnecting module (18) comprises at least one general surge suppressor (54) which is arranged electrically in parallel with the fuse (26).

7. The device as claimed in claim 6, **characterized in that** the disconnecting module (18) comprises an absorption branch (56), which is arranged electrically in parallel with the main branch (24) and with the overload branch (32) between the first point (20) and the second point (22) of the disconnecting module (18), and **in that** the general surge suppressor (54) is interposed in the absorption branch (56) between the first point (20) and the second point (22).

8. The device as claimed in any of claims 2 to 7, **characterized in that** the pre-charging circuit (38) of the overload capacitor (34) includes a creepage distance (40) to a potential reference (42, 64) which extends between the potential reference (42, 64) and a tapping point (44) in the overload branch (32), the tapping point (44) being arranged in the overload conductor (33) of the overload branch (32) between the overload capacitor (34) and the overload making breaker (36), the creepage distance (40) to a potential reference (42, 64) includes a resistive component (46).

9. The device as claimed in any of claims 2 to 11, **characterized in that** the overload making breaker (36) is a two-way static switch, the overload making breaker (36) being a two-way semiconductor switch.

10. The device as claimed in any of claims 2 to 9, **characterized in that** the disconnecting module (18) comprises, in parallel with the main branch (24) and with the overload branch (32), an additional overload branch (32') having an additional overload conductor (33') which extends between the first point (20) and the second point (22) of the disconnecting module (18),

    **in that** the overload system (30) of the disconnecting module (18) comprises:

      - at least one additional overload capacitor (34') which is interposed in the additional overload conductor (33') of the additional overload branch (32'), between the first point (20) and the second point (22) of the disconnecting module (18),
      - an additional two-way overload making breaker (36') which is interposed in the additional overload conductor of the additional overload branch (32'), the additional overload making breaker (36') and the additional overload capacitor (34') being interposed successively one after the other in the additional overload conductor of the additional overload branch (32') between the first point (20) and the second point (22) of the disconnecting module (18), the additional overload making breaker (36') preventing, in an open state, the circulation of electric current in the additional overload branch (32') between the first point (20) and the second point (22) of the disconnecting module, and the additional overload making breaker (36') permitting, in a closed state, the two-way circulation of current in the additional overload branch (32') between the first point (20) and the second point (22) of the disconnecting module, and
      - a pre-charging circuit (38') of the additional overload capacitor (34');

    **in that**, in the conducting configuration of the device, the additional overload making breaker (36') is in its open state;
    and **in that**, in an overload configuration of the device, the additional overload making breaker (36') is in its closed state to permit the discharging of the additional overload capacitor (34') into the main branch, creating an oscillating additional discharging current which, in the main branch (24), over at least one oscillation half-period, is added in terms of absolute value to the fault current circulating in the main branch.

11. The device as claimed in any of claims 2 to 10, **characterized in that** the disconnecting module comprises at least one discharging circuit of the overload capacitor for maintenance operations.

12. The device as claimed in any of claims 2 to 11, in combination with claim 12, **characterized in that** the disconnecting module comprises, electrically in parallel with the overload capacitor (34), a capacitor protection resistance (60).

13. The device as claimed in any of claims 2 to 12, in combination with claim 12, **characterized in that** that the disconnecting module comprises, electrically in parallel with the overload making breaker (36), a making breaker protection resistance (62).

14. A method for disconnecting a high-voltage direct electric current, wherein the disconnection of the electric current is ensured by the melting of a fuse (26) which is interposed in a main branch (24) in which circulates, in a nominal conducting phase, an operational electric current, in which the method includes:

   - a step of storing an electrical energy in an overload system (30);
   - a step of generating, by the overload system (30), an overload current which, in the main branch (24), is superimposed on a fault current to ensure the melting of the fuse (26),

   **characterized in that** the overload current is an oscillating current which, in the main branch (24), over at least one half-period of oscillation, is added to the fault current in terms of absolute value.

15. The method as claimed in claim 14, **characterized in that** the step of generating an oscillating overload current is triggered by the control of a two-way overload making breaker (36) of the overload system (30).

[Fig. 1]

[Fig. 2]

[Fig. 3]

[Fig. 4]

[Fig. 5]

[Fig. 6]

[Fig. 7]

[Fig. 8]

## RÉFÉRENCES CITÉES DANS LA DESCRIPTION

**Documents brevets cités dans la description**

- WO 2020259924 A
- US 20200411271 A
- US 3868552 A